Europäisches Patentamt

European Patent Office

Office européen des brevets

(19)

(11) Veröffentlichungsnummer: **0 052 273**
A1

(12) **EUROPÄISCHE PATENTANMELDUNG**

(21) Anmeldenummer: 81109093.5

(22) Anmeldetag: 28.10.81

(51) Int. Cl.³: **B 23 Q 15/00**
B 24 B 49/16, G 05 B 19/18

(30) Priorität: 06.11.80 CH 8236/80

(43) Veröffentlichungstag der Anmeldung:
26.05.82 Patentblatt 82/21

(84) Benannte Vertragsstaaten:
AT BE CH DE FR GB IT LI LU NL SE

(71) Anmelder: GEORG FISCHER AKTIENGESELLSCHAFT
Mühlentalstrasse 105
CH-8201 Schaffhausen(CH)

(72) Erfinder: Aberle, Beat
Bauhaldenstrasse 36
CH-5417 Untersiggenthal(CH)

(72) Erfinder: Möckli, Peter
Eichenstrasse 31
CH-8200 Schaffhausen(CH)

(54) Werkstückbearbeitungsvorrichtung.

(57) Ein Industrieroboter zum Bearbeiten von Werkstücken weist ein Werkzeug und eine Anpresseinrichtung in Form eines oder zweier Luftzylinder auf, mit deren Hilfe über Kolbenstangen (3, 19) das Werkzeug (13) unter konstantem Druck gegen das Werkstück (49) gespannt wird. Zum Abtasten der Werkstückkontur wird diese in grobe Segmente zerlegt und punktweise programmiert, wobei der Roboter nach dieser Grobaufteilung die Punkte (71 -78) der Reihe nach in einfachen Bahnen anfährt. Die Feinregelung erfolgt über die Anpresseinrichtung, die das Werkzeug (13) mit einstellbarer Kraft gegen das Werkstück (49) drückt.

Fig.1

GEORG FISCHER AKTIENGESELLSCHAFT,     8201 Schaffhausen

2208/FEW/ 14.9.1981 / MS-ba /

Werkstückbearbeitungsvorrichtung

Die Erfindung betrifft eine Werkstückbearbeitungsvorrichtung nach dem Oberbegriff des Anspruchs 1.

Es sind Bearbeitungsvorrichtungen bekannt, welche über
Industrieroboter oder vorprogrammierte Steuereinrichtungen ein geführtes Werkzeug einen genau vorgegebenen
Weg entlang bewegen. Dieser Weg muss vorher genau einem
zu bearbeitenden Werkstück angepasst werden. Derartige
Maschinen haben den Nachteil, dass einerseits die
Programmierung des Weges sehr viel Zeitaufwand erfordert, da der Weg in eine Vielzahl von nahe aneinandergelegene kleine Abschnitte zerteilt werden muss, und
dass zweitens alle Werkstücke in eine genau definierte
Lage gebracht werden müssen, da bei Abweichen aus dieser
Lage der Weg des Werkzeugs nicht mit der Werkstückkontur
übereinstimmt.

Desweiteren ist eine Vorrichtung mit federgelagerten
Büchsen bekannt, bei welcher der Anpressdruck von der
Auslenkung der Feile abhängig ist. Der Anpressdruck ist nicht kontrollierbar und das führt zu Ausschuss.

Die Erfindung hat zur Aufgabe, diese Nachteile zu eliminieren und eine Führung für ein Werkzeug bereitzustellen, bei der der Weg des Werkzeugs nicht genau vorprogrammiert werden muss, bei der der Anpressdruck des Werkzeugs auf dem Werkstück unabhängig ist von der Relativstellung zu den Halteeinrichtungen, bei der der Anpressdruck ferner stufenlos einstellbar ist, und bei der die Hysteresis bezüglich der Werkzeugpositionierung sowie die Reibung der Werkzeugführung sehr klein ist.

Erfindungsgemäss geschieht dies durch eine Werkstückbearbeitungsvorrichtung der eingangs genannten Art, welche ferner die im Kennzeichen des Anspruchs 1 angeführten Merkmale aufweist.

Die Erfindung wird im Folgenden an Hand der Zeichnung näher erläutert.

Es zeigen:

Fig. 1    den Aufbau der Anpresseinrichtung mit dem Werkzeug,

Fig. 2    die prinzipielle Anordnung eines Bearbeitungswerkzeugs zusammen mit einem mehrdimensionalen Industrieroboter,

Fig. 3    ein Beispiel für die grobe Vorprogrammierung der Bewegung des Werkzeugs bzw. des Industrieroboters, und

Fig. 4      eine andere Prinzipanordnung der Bearbeitungsvorrichtung mit nur eindimensional
bewegbarem Werkzeug und geführtem Werkstück.

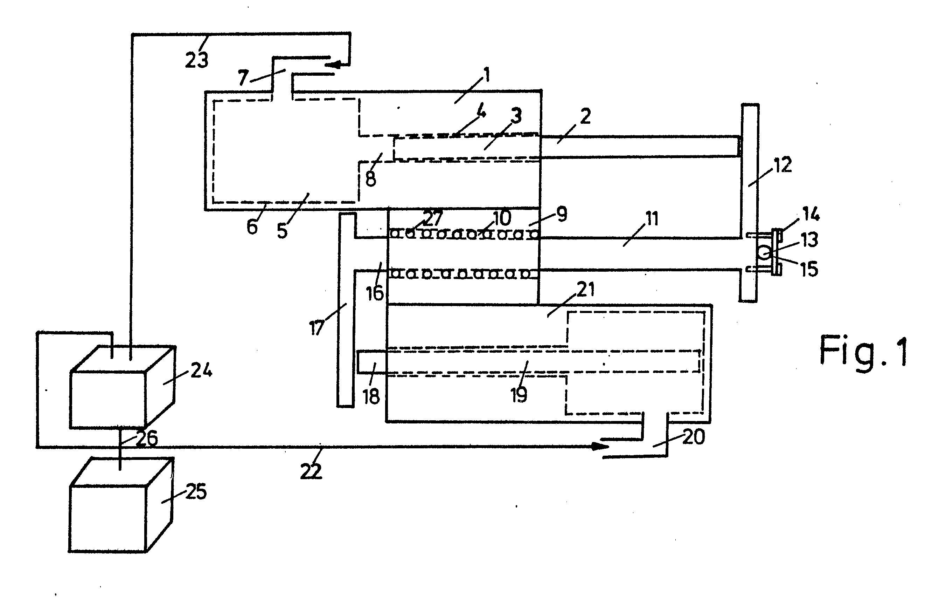

Mit Bezug auf die Fig. 1 sind zwei um 180$^{\circ}$ versetzt
angeordnete Luftzylinder 1 und 21 links und rechts von
einem Halteblock 9 angeordnet. Die beiden Luftzylinder
1 und 21 sind gleich ausgeführt und weisen je einen
Hohlraum 5 auf, in den über die Leitung 7 bzw. 20
Druckluft zugeführt wird. Vom Hohlraum 5 führt eine
schmale lange Bohrung 8 nach aussen. In der Bohrung 8
befindet sich eine Kolbenstange 3 bzw. 19 von der ein
Teil 2 bzw. 18 aus dem Zylinder durch Erzeugung von
Ueberdruck herausgeschoben werden kann. Die Kolbenstange 3 bzw. 19 liegt mit etwas Spiel frei in der
Bohrung 8, und dadurch kann ein gewisser Luftstrom vom
Hohlraum 5 durch die Bohrung 8 nach aussen dringen.
Der geölte Luftstrom dient der Kolbenstange als praktisch reibungsfreie Lagerung. Aus Gründen gleichbleibender Anpresskraft muss die Reibung aller beweglichen
Teile der Spanneinrichtung möglichst gering sein. Die
beiden Kolbenstangen 2 und 18 werden durch entsprechende
Druckbeaufschlagung eines der beiden zugehörigen Luftzylinder in entgegengesetzte Richtungen bewegt.

Der Halteblock 9 weist eine Längsführung 27 auf, in
der mittels eines langgestreckten Kugellagers 10 eine
Stange 11 frei axial beweglich geführt bzw. gelagert
ist.

An ihren beiden Enden weist die Stange 11 je einen
Querflansch 12 bzw. 17 auf, welcher sich quer zur Achse

- 4 -

der Stange 11 soweit erstreckt, dass die Kolbenstangen 2 bzw. 18 bei ihrer Axialbewegung nach aussen gegen den einen oder den anderen Flansch anstossen.

Der Flansch 12 trägt mittels Klemmeinrichtungen 14 und 15 an ihm befestigt ein Werkzeug, beispielsweise eine Rundfeile 13. Die Drucksteuerung der Luftzylinder erfolgt über eine druckgeregelte Druckluftversorgungseinrichtung 24, welche über eine Leitung 26 mit einer Steuereinrichtung verbunden ist, die ebenfalls nicht dargestellte Führungseinrichtungen für die aus den in Fig. 1 dargestellten Teilen bestehende Spanneinrichtung 1, 21 ansteuert.

Die Funktion der Spanneinrichtung ist folgende:

Soll die Feile 13 in der Fig. 1 mit einer bestimmten Anpresskraft nach rechts gespannt werden, so wird über die Druckluftversorgungseinrichtung 24 und die Leitung 23 der Luftzylinder 1 unter Ueberdruck gesetzt, so dass die Kolbenstange 3 aus dem Zylinder 1 ausgefahren wird, und zwar so weit, bis die an dem von der Kolbenstange 3 mit geschobenen Flansch 12 befestigte Feile 13 an einem nicht dargestellten Hindernis ansteht. Der Ueberdruck im Zylinder 1 wird mittels bekannten Mitteln wie Druckregelventilen nachgeregelt, so dass die Kolbenstange 3 unabhängig von ihrer Ausfahrstellung mit gleichbleibender Kraft gegen das Hindernis gepresst wird.

Muss im Laufe der Bearbeitung eines Werkstückes, welches das Hindernis darstellt, die relative Ausfahrstellung der Kolbenstange 3 wegen der Anpressung an die Werkstückkontur geändert werden, so geschieht dies immer unter Nachregelung des Luftdrucks im Zylinder, der sich bei Verschiebung der Kolbenstange leicht ändert.

Auf diese Weise kann bei vorgegebener Tangentialbewegung zwischen Feile und Werkstück von der Spanneinrichtung eine vertikale Bewegungskomponente und damit eine exakte Abtastspur für die Feile am Werkstück erzeugt werden.

Die Anpresskraft des Werkzeugs hängt von der Art der Bearbeitung und vom Material des Werkstücks ab, und sie ist für das Abfeilen eines Grates einer Giessereisandform beispielsweise entsprechend niedriger als für das Abfräsen des Gussgrates eines Metallgussstückes.

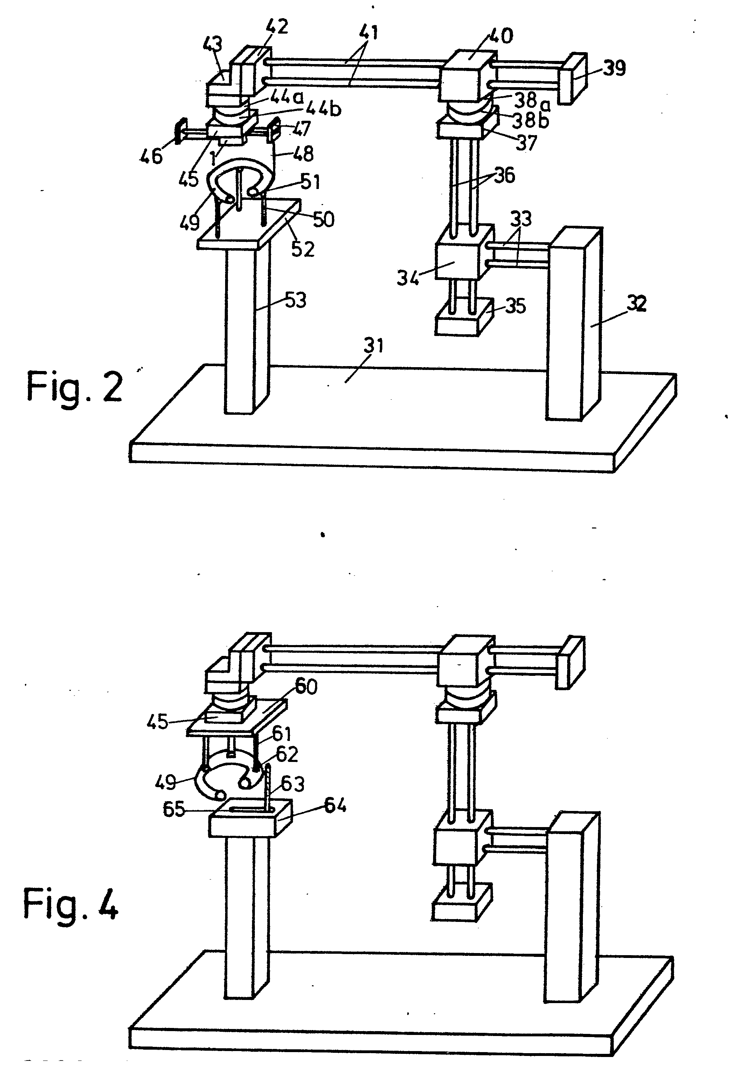

In der Fig. 2 ist eine Manipulatoreinrichtung dargestellt, mit Hilfe derer das Bearbeitungswerkzeug beispielsweise eine Feile in grober Anpassung an die Werkstückkontur am Werkstück entlang geführt wird.

Auf einer Grundplatte 31 sind zwei Sockel 32 und 53 montiert, wobei am Sockel 32 der Manipulator und am Sockel 53 die Werkstückhaltung montiert ist, die aus einer Grundplatte 52 mit mehreren Rohrständern 50 und darauf angeordneten Saugnäpfen 51 besteht. Auf den Saugnäpfen 51 liegt grob ausgerichtet das Werkstück 45 auf, welches durch Ansaugen der Luft durch die Saugnäpfe festgehalten wird.

Der Industrieroboter ist über zwei Stangen 33 am Sockel 32 montiert und weist zwei Linear- und zwei Zirkulareinheiten auf, wobei die senkrechte Lineareinheit aus einem Antrieb 34, zwei Führungsstangen 36, einem oberen 37 und einen unteren Flansch 35 und die waagrechte Lineareinheit aus einem Antrieb 40 zwei Führungsstangen 41 einem linken 42 und einem rechten Flansch 39 besteht. Die erste Zirkulareinheit besteht aus zwei Scheiben 38a und 38b - der Antrieb hierzu ist innerhalb der Scheiben angeordnet - und befindet sich zwischen den beiden Lineareinheiten, wobei die Scheibe 38a am Antrieb 40 der waagrechten und die Scheibe 38b am Flansch der senkrechten Lineareinheit angeschraubt ist. Am Flansch 42 ist ein Winkelflansch 43 befestigt, an dem die zweite Zirkulareinheit bestehend aus den Scheiben 44a und 44b angeordnet ist. Unter dieser Zirkulareinheit ist mittels eines Flansches 45 die Spanneinrichtung nach Fig. 1 angeschraubt, von der ein Luftzylinder 1 sowie die Flansche 46 und 47 zu sehen sind. Am Flansch 47 ist die Feile 48 angeklemmt, welche am Werkstück 49 anliegt.

Die Funktionsweise ist die folgende:

Mittels der Roboterkomponenten 34 - 43 kann die Feile 48 bezüglich des Werkstücks in jede beliebige Position gebracht werden. In vorprogrammierter Weise wird die gewünschte Bewegungsbahn für die Feile in Punkte mit relativ grossen Abständen transformiert, wobei der Roboter so gesteuert wird dass die Feile ohne Feinregelung durch die Anpresseinrichtung d.h. die Luftfeder 1 diese Punkte nacheinander in möglichst gerader bzw. einfacher Bahn anlaufen würde. Durch die Feinregelung der Feilenposition mittels der Anpresseinrichtung folgt die Feile jedoch genau den komplizierteren Werkstückkonturen, wobei dabei nur dafür gesorgt sein muss, dass die werkstückkonturbedingten Auslenkungen der Feile innerhalb des Regelbereichs der Anpresseinrichtung bleiben, da sonst der Roboter entsprechend nachgeführt werden muss. Je nach Spannrichtung der Feile gegen das Werkstück arbeitet die Anpresseinrichtung in mindestens zwei verschiedenen Drehpositionen der zweiten Zirkulareinheit 44a, 44b des Roboters jeweils mittels des Zylinders 1 oder 21, so dass durch die Kombination dieser zwei Freiheitsgrade mindestens vier rechtwinklig gekreuzte Spannrichtungen eingestellt werden können.

Die Anordnung der Linear- und Zirkulareinheiten ist hierbei willkürlich gewählt und die Erfindung ist keinesfalls darauf eingeschränkt. Insbesondere ist auch die Verwendung eines Koordinatentischem mit einem Hebe- und Schwenkarm vorteilhaft einzusetzen.

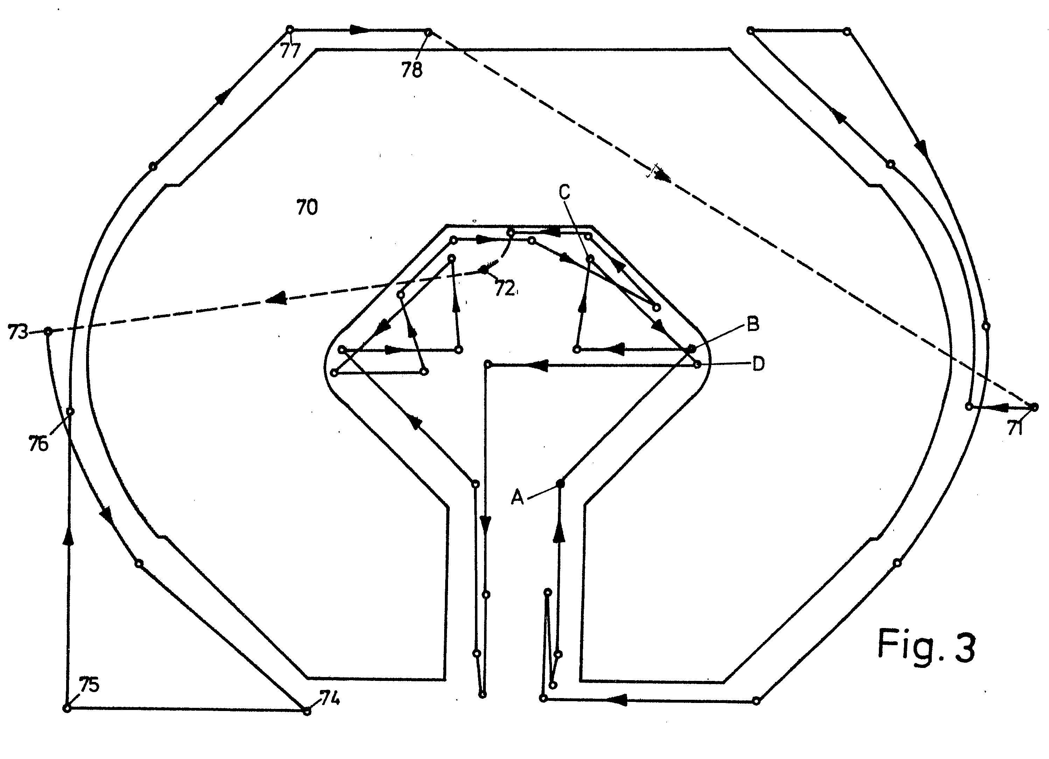

Die Fig. 3 zeigt die punktweise Transformation der Abtastkurve des Werkzeugs an dem Werkstück.

Als Werkstück wurde ein Giessereisandkern 70 ausgewählt, der einem aufgeschnittenem Torus entspricht. Die Zeichenebene ist eine Symmetrieebene bezüglich eines Aequatorialschnitts, und der Grat von der Herstellung mittels zweier Halbformen liegt eben in der Zeichenebene. Durch Entlangfahren einer Feile an den Konturen des Kerns 70 wird der ohnehin bröselige Grat abgerieben. Beginnend beim Punkt 71 fährt der Manipulator einen Polygonzug, der bis auf die Strecken 72-73-79 und 78-71 in der Zeichenebene liegt. Auf den genannten Teilbahnen wird die Feile gehoben und quer über das Werkstück geführt da ein herumführen

- 8 -

der Feile um die Werkstückkontur mehr Punkte und daher mehr Zeit erfordern würde. Die Aufteilung der Bahn scheint auf den ersten Blick komplizierter als notwendig, ist aber dadurch bedingt, dass die Feilrichtung vorgegeben ist, so dass nicht einfach die Kontur in einer einfachen Schleife von Anfang bis Ende durchfahren werden kann.

Vom Punkt A wird die Kontur nur bis zum Punkt B verfolgt, anschliessend jedoch nicht weiter bis C, da diese Feilrichtung keine optimale Entgratung erlaubt, sondern die Richtung wird umgedreht und die Feilung erfolgt von C nach O. Entsprechendes gilt für die anderen Schleifen. Bei Punkt 78 ist die Bearbeitung zu Ende und die Feile wird gehoben und über dem Kern zu Punkt 71 geführt. Die Rückkehr zum Ausgangspunkt 71 erfolgt beliebig.

Die Fig. 4 zeigt eine zweite Ausführungsart der Führung von Werkstück und Werkzeug, wobei das Werkstück 49 vom Industrieroboter geführt wird, der vom Sockel bis zum Flansch 45 identisch ist mit dem Roboter nach Fig. 2. Am Flansch 45 ist diesmal jedoch eine Platte 60 angeschraubt, welche drei Rohrstangen 61 mit Saugnäpfen 62 trägt, durch welche mittels Unterdruck das Werkstück festgehalten wird. In vorprogrammierter Weise wird das Werkstück 49 um eine Feile 63 herumgeführt, welche in einem Langloch 65 eines Gehäuses 64 in der sich die Spanneinrichtung befindet eindimensional unter konstantem Anpressdruck bewegbar ist.

Für diese Art der Steuerung genügt eine einzige Anpresseinrichtung für das Werkzeug, da das Werkstück mittels des Roboters in jede gewünschte Lage gebracht werden kann. Bei dem Werkstück handelt es sich hier um einen Metallabguss, oder Sandkern bzw. Sandteile dessen Grate oder Angussstücke mittels eines Fräsers entfernt werden. Bei Werkstücken deren Grate nicht in einer Horizontalebene liegen, sondern komplizierter verlaufen, muss der Roboter mit entsprechenden zusätzlichen Freiheitsgraden ausgerüstet werden, damit das Werkstück beliebig geführt werden kann.

Auch hier ist die Erfindung nicht auf die Verwendung des dargestellten Industrieroboters eingeschränkt, sondern es ist jede Art einer "Handling"-Maschine verwendbar, beispielsweise auch ein nur aus Drehgelenken bestehender Industrieroboter.

In der Führung nach Fig. 4 dient der Industrieroboter auch gleichzeitig als Transporter für das Werkstück, wobei bei der Fig. 2 zusätzlich noch ein "Handling" Gerät für die Zu- und Wegführung der Werkstücke vom Arbeitsplatz nötig wäre.

P a t e n t a n s p r ü c h e

2208/FEW

1. Werkstückbearbeitungsvorrichtung bestehend aus mindestens einem Bearbeitungswerkzeug und Führungseinrichtungen für das Bearbeitungswerkzeug, wobei mittels der Führungseinrichtungen eine Relativbewegung zwischen Bearbeitungswerkzeug und Werkstück erzeugbar ist, dadurch gekennzeichnet, dass das Bearbeitungswerkzeug (13) mittels einer Anpresseinrichtung (1, 21) unter konstanter Kraft gegen das Werkstück (49) pressbar ist, und dass eine grobe Relativbewegung zwischen Bearbeitungswerkzeug (13) und Werkstück (49) mittels punktweiser Programmierung in relativ grossen Abständen der Punkte (71 - 78) zueinander festlegbar ist, wobei die genaue Bahn der Relativbewegung durch Abtasten der Werkstückkontur und durch Verschieben des Bearbeitungswerkzeugs (13) relativ zur Spanneinrichtung (1, 21) unter deren konstanten Anpresskraft erfolgt.

2. Werkstückbearbeitungsvorrichtung nach Anspruch 1, dadurch gekennzeichnet, dass die Anpresseinrichtung (1, 21) aus mindestens einer Luftfeder besteht.

3. Werkstückbearbeitungsvorrichtung nach Anspruch 2, dadurch gekennzeichnet, dass die Luftfeder aus einer mittels Luftdruck in einem Zylinder (1, 21) bewegbaren Kolbenstange (3, 19) besteht, welche in einer Gehäusebohrung (8) geführt ist, welche relativ zur Kolbenstange (3, 19) ein Spiel aufweist, so dass ein geringer Teil der geölten Druckluft unter Bildung einer Luft- / Oellagerung für die Kolbenstange (3, 19) aus der Bohrung (8) entweicht.

4. Werkzeugbearbeitungsvorrichtung nach Anspruch 2 oder 3, dadurch gekennzeichnet, dass zwei um 180$^{\text{o}}$ zueinander versetzt arbeitende Luftfedern vorhanden sind, wobei je nach Ansteuerung der Luftfedern das Bearbeitungswerkzeug (13) in zwei Richtungen spannbar ist.

5. Werkstückbearbeitungsvorrichtung nach Anspruch 4, dadurch gekennzeichnet, dass die Anpresseinrichtung (1, 21) zwischen den Führungseinrichtungen (33 - 44) und dem Bearbeitungswerkzeug (13) angeordnet ist.

6. Werkstückbearbeitungsvorrichtung nach Anspruch 5, dadurch gekennzeichnet, dass die Anpresseinrichtung (1, 21) relativ zu den Führungseinrichtungen (33 - 44) um mindestens 90$^{\text{o}}$ verdrehbar ist.

7. Werkzeugbearbeitungsvorrichtung nach einem der Ansprüche 3 bis 6, dadurch gekennzeichnet, dass eine Einstelleinrichtung für den Druck in den Luftzylindern vorhanden ist, mit deren Hilfe der Druck im Luftzylinder stufenlos regelbar ist.

8. Werkzeugbearbeitungsvorrichtung nach einem der Ansprüche 3 bis 7, dadurch gekennzeichnet, dass das Bearbeitungswerkzeug (13) mittels Kugellagern (10) in einer Halteeinrichtung (9) geführt ist, so dass die Summe der bei einer Bewegung des Bearbeitungswerkzeugs (13) auftretenden Reibungsanteile der Kolbenstangen (3, 19) einerseits und der Werkzeughalterung (9, 10, 11) andererseits und damit die Hysterese bezüglich der Positionierung sehr gering ist.

9. Verfahren zur Bearbeitung eines Werkstückes mittels eines Werkzeugs, welches mittels Führungseinrichtungen an der Werkstückkontur entlang geführt wird, dadurch gekennzeichnet, dass die Führungseinrichtungen eine an das Werkstück grob angepasste Bahn beschreiben und dass durch eine zusätzliche Feinregelung das Werkzeug in eine genaue, der Kontur des Werkstücks folgende Bahn gebracht wird.

Fig.1

2/3

0052273

Fig. 2

Fig. 4

Fig. 3

Europäisches
Patentamt

**EUROPÄISCHER RECHERCHENBERICHT**

Nummer der Anmeldung

EP 81 10 9093

| | EINSCHLÄGIGE DOKUMENTE | | KLASSIFIKATION DER ANMELDUNG (Int. Cl.⁴) |
|---|---|---|---|
| Kategorie | Kennzeichnung des Dokuments mit Angabe, soweit erforderlich, der maßgeblichen Teile | betrifft Anspruch | |
| A | MACHINES & TOOLING, Band XLV, Nr. 8, 1974, Seiten 63-66 Melton Mowbray, G.B. A.S. KOLISKOR: "Computer-numerical control of measuring machines" -- | 1 | B 23 Q 15/00 B 24 B 49/16 G 05 B 19/18 |
| A | DE - A - 2 523 225 (SANKO) | 1 | |
| A | DE - A - 1 947 868 (HEALD) | 1 | |
| A | GB - A - 844 048 (FOLKE) | 1 | |
| A | FR - A - 2 243 783 (CHIJIIWA) | 1 | RECHERCHIERTE SACHGEBIETE (Int. Cl.³) |
| A | US - A - 3 497 668 (HIRSCH) ---- | 1 | B 23 C 1/00 3/00 B 23 D 67/00 69/00 B 24 B 49/00 B 23 Q 15/00 17/00 G 05 B 19/00 |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Den Haag | 21-12-1981 | HORVATH |